# FASCICULE DE BREVET EUROPEEN

(11) **EP 0 693 670 B1**
(45) Date de publication et mention de la délivrance du brevet: **09.06.1999**
(21) Numéro de dépôt: 95401630.9
(22) Date de dépôt: 06.07.1995
(51) Int. Cl.: G01B 7/04, G02B 6/44, F41G 7/32, G01B 7/02, G01M 11/08, G01P 3/54, B65H 61/00, F42B 15/04

(54) **Dispositif de repérage de longueur de fibre sur une bobine de fibre optique et procédé de fabrication d'un tel dispositif**
Vorrichtung zum Markierung der Länge von Fasern auf einer faseroptischen Spule, und Verfahren zu deren Herstellung
Device for indicating the length of fibre on an optical-fiber spool and procedure for its manufacture

(30) Priorité: 08.07.1994 FR 9408480
(43) Date de publication de la demande: 24.01.1996
(73) Titulaire: AEROSPATIALE Société Nationale Industrielle, 75781 Paris Cédex 16 (FR)
(72) Inventeur: Barnier, Jean-François, F-92320 Chatillon (FR)
(74) Mandataire: Dubois-Chabert, Guy

(56) Documents cités:
- EP-A- 0 425 118
- DE-C- 4 112 016
- US-A- 3 156 185
- US-A- 3 246 860
- US-A- 5 304 804
- US-A- 5 309 647

## Description

L'invention concerne un dispositif permettant de repérer une longueur de fibre disponible ou déroulée sur un bobine de fibre optique.

L'invention concerne également un procédé permettant de fabriquer de façon simple un tel dispositif de repérage.

Le dispositif selon l'invention peut être utilisé dans toute liaison par fibre optique entre deux objets appelés à s'éloigner l'un de l'autre, dans laquelle la fibre se déroule à partir d'une ou plusieurs bobines contenant initialement la fibre. Une application privilégiée concerne le cas des liaisons par fibre optique entre un engin fibroguidé et un poste de tir, ce dernier pouvant être fixe ou mobile et situé dans l'air, à terre, en mer ou sur un véhicule sous marin.

Une telle liaison par fibre optique assure généralement une transmission d'informations bidirectionnelle entre les deux objets qu'elle relie. Dans une première direction, les informations transmises peuvent notamment comprendre des signaux codés représentatifs d'une image fournie par une caméra vidéo embarquée sur l'un des objets et, en sens opposé, des signaux visant à corriger la trajectoire de cet objet en fonction de l'image fournie par la caméra.

Lorsque deux objets sont reliés entre eux par une fibre optique, il peut être utile de connaître la longueur de fibre restant disponible sur la bobine ou, à l'inverse, la longueur de fibre déjà déroulée. Ainsi le repérage d'une longueur de fibre déterminée sur la bobine peut être utilisé pour déclencher automatiquement des systèmes embarqués sur l'objet, selon un programme établi à l'avance. L'information relative au franchissement d'une longueur de fibre déterminée sur la bobine peut aussi être transmise à l'opérateur afin de lui permettre d'accomplir certaines opérations.

Les dispositifs connus permettant de repérer une longueur de fibre ou de fil sur une bobine sont de deux types.

Un premier type de dispositifs de repérage concerne des dispositifs qui mesurent en continu la longueur de fibre ou de fil dévidée de la bobine.

On trouve notamment dans cette première catégorie des dispositifs comprenant une tête magnétique au travers de laquelle passe un fil électrique portant des signaux préenregistrés, comme l'illustre notamment le document US-A-3 246 860. La cadence de défilement de ces signaux préenregistrés dans la tête magnétique permet de connaître la vitesse de déroulement du fil. Il s'agit toutefois d'un dispositif complexe. En outre, ce dispositif n'est pratiquement pas applicable aux fibres optiques en raison de leur fragilité. De plus, le marquage d'un fil sur toute sa longueur constitue une opération longue et coûteuse.

On trouve aussi dans cette première catégorie de dispositifs de repérage connus les dispositifs tels que celui qui est illustré par le document FR-A-2 675 250, Ces dispositifs comptent le nombre de spires dévidées de la bobine, grâce à des diodes photoélectriques repérant chaque passage du fil correspondant au dévidage d'une spire. Il s'agit là aussi de dispositifs complexes et coûteux, qui nécessitent la présence d'un circuit de correction électronique prenant en compte les différences de diamètre des spires entre l'intérieur et l'extérieur de la bobine.

La deuxième catégorie de dispositifs connus permettant de repérer une longueur de fibre ou de fil sur une bobine, concerne des dispositifs fournissant de façon ponctuelle une ou plusieurs informations de longueur de fibre servant par exemple à déclencher automatiquement un ou plusieurs dispositifs embarqués. L'information de longueur de fil peut aussi être transmise à l'opérateur.

Le document FR-A-1 308 884 illustre par exemple différents dispositifs de repérage de longueur de fil servant à déclencher automatiquement certaines opérations sur l'engin selon un programme établi à l'avance. Les différentes solutions décrites reposent toutes sur l'insertion d'un ou plusieurs organes, par exemple en forme de boucles, entre les spires de l'enroulement. Le déroulement du fil entraîne dans la plupart des cas la rupture de l'organe en forme de boucle. Cet organe en forme de boucle peut notamment être un conducteur électrique dont la rupture est détectée par un circuit électrique extérieur relié à la boucle.

Les dispositifs de repérage de longueur de fil de ce type sont sensiblement plus simples et moins coûteux que les dispositifs donnant une mesure en continu de la longueur de fibre ou de fil dévidée de la bobine. Toutefois, ils sont totalement inadaptés à une liaison par fibre optique. En effet, une fibre optique ne peut supporter l'effort mécanique qui doit être appliqué pour rompre le conducteur électrique en forme de boucle noyé dans la bobine.

L'invention a principalement pour objet un dispositif de repérage de longueur de fibre sur une bobine, fonctionnant de manière ponctuelle et dont la mise en oeuvre ne nécessite pas l'application d'un effort mécanique notable, de telle sorte qu'elle est particulièrement adaptée au cas d'une liaison par fibre optique.

Selon l'invention, ce résultat est obtenu au moyen d'un dispositif de repérage de longueur de fibre sur une bobine de fibre optique, comprenant une bobine de fibre optique et au moins une boucle en un matériau électriquement conducteur, noyée dans la bobine de façon apte à être rompue lors d'un déroulement d'une longueur de fibre prédéterminée, caractérisé par le fait que la boucle est constituée d'un revêtement électriquement conducteur, réalisé sur des spires en contact de la bobine.

Le revêtement électriquement conducteur est avantageusement disposé sur les spires en contact d'une même couche. Cette couche est choisie de préférence afin que la fibre optique y soit dévidée de l'aval vers l'amont ou inversement, par rapport à une direction selon laquelle la fibre quitte la bobine, sensiblement selon l'axe de cette dernière, toutefois cette exigence n'est pas impérative.

Dans une forme de réalisation préférentielle de l'invention, la boucle a sensiblement la forme d'un U dont la branche intermédiaire est orientée selon une direction sensiblement circonférentielle par rapport à la bobine et dont les deux autres branches sont orientées selon une direction sensiblement longitudinale par rapport à la bobine.

L'invention a aussi pour objet un procédé de fabrication d'un dispositif de repérage de longueur de fibre sur une bobine de fibre optique, selon lequel on noie dans la bobine au moins une boucle en un matériau électriquement conducteur, apte à se rompre lors d'un déroulement d'une longueur de fibre prédéterminée, caractérisé par le fait qu'on forme la boucle en réalisant un revêtement électriquement conducteur sur des spires en contact de la bobine.

Selon le cas, on réalise le revêtement soit lors du bobinage de la fibre, soit avant de procéder à ce bobinage.

Par ailleurs, le revêtement peut être réalisé soit par dépôt d'une peinture ou d'un vernis électriquement conducteur, soit par dépôt métallique direct.

Lorsqu'on réalise le revêtement lors du bobinage de la fibre, ce revêtement est avantageusement réalisé après le bobinage d'une couche donnée de la fibre, en plaçant des masques sur cette couche pour délimiter la forme de la boucle.

On décrira à présent, à titre d'exemples non limitatifs, différentes formes de réalisation de l'invention, en se référant aux dessins annexés, dans lesquels :
- la figure 1 est une vue de côté, en coupe partielle, représentant schématiquement une bobine de fibre optique susceptible d'être équipée d'un ou plusieurs dispositifs de repérage de longueur de fibre conformes à l'invention, cette bobine étant logée dans la partie arrière d'un engin fibroguidé ;
- la figure 2 est une vue de dessus de la bobine de la figure 1 illustrant l'implantation d'un dispositif de repérage de longueur de fibre conforme à l'invention, à l'intérieur de cette bobine ; et
- la figure 3 est une vue en coupe transversale représentant à plus grande échelle l'extrémité arrière de la bobine des figures 1 et 2, en cours de dévidage.

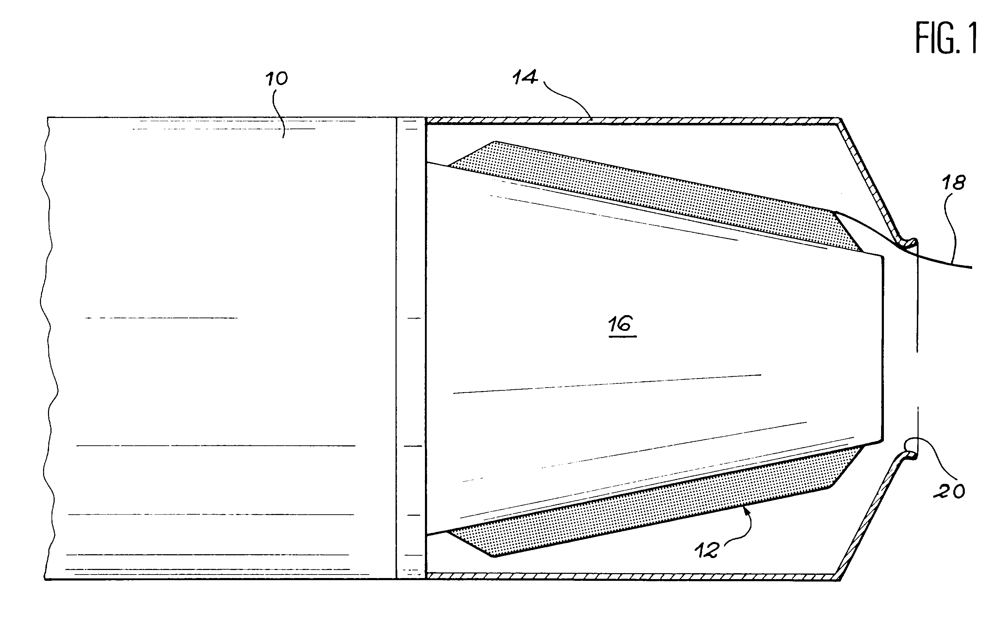

Sur la figure 1, la référence 10 désigne la partie arrière du corps d'un engin relié à un poste de tir par une fibre optique 18. Il est à noter qu'il ne s'agit que d'un exemple nullement limitatif de l'invention, qui peut s'utiliser dans de nombreuses autres applications, comme on l'a indiqué précédemment.

L'arrière du corps 10 de l'engin porte une bobine 12 de fibre optique, entourée par un carter de protection 14 fixé au corps 10. La bobine 12 de fibre optique comporte un noyau 16, généralement de forme tronconique, fixé à l'arrière du corps 10 selon l'axe de l'engin. Le diamètre du noyau 16 diminue de l'avant vers l'arrière, de façon à favoriser le déroulement de la fibre optique 18 bobinée sur ce noyau 16. Le carter de protection 14 entourant la bobine 12 comporte à son extrémité arrière une ouverture circulaire 20 par laquelle s'échappe la fibre 18. Cette ouverture circulaire 20 est centrée sur l'axe de l'engin et présente un diamètre légèrement supérieur au diamètre de l'extrémité arrière du noyau 16 de la bobine.

Conformément à l'invention, un ou plusieurs dispositifs de repérage de longueur de fibre sont placés dans la bobine 12, lors de sa fabrication, afin d'indiquer lorsqu'une longueur prédéterminée de la fibre optique 18 a été dévidée de la bobine 12.

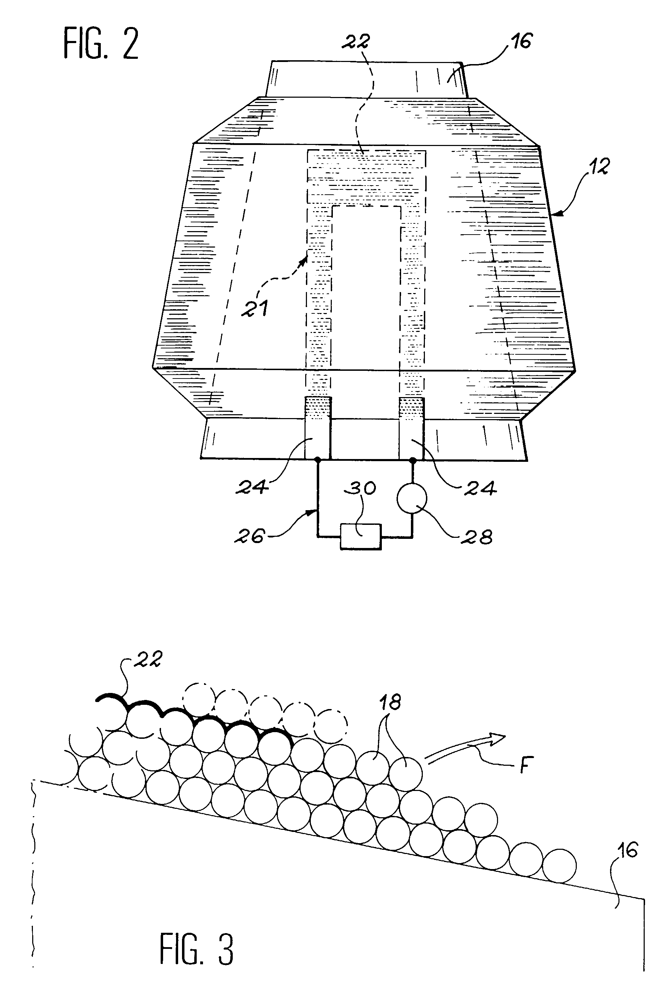

La figure 2 illustre schématiquement un tel dispositif de repérage de longueur de fibre, intégré dans l'épaisseur de la bobine 12, à un niveau correspondant approximativement à une longueur de fibre restant disponible sur la bobine 12 égale à environ 30 % de la longueur totale de la fibre bobinée initialement sur le noyau 16.

Ce dispositif de repérage de longueur de fibre comprend une boucle 21, constituée d'un revêtement 22 électriquement conducteur, disposé sur les spires en contact d'une même couche de la bobine formée par la fibre optique 18. Cette boucle 21 est terminée par deux contacts électriques 24 susceptibles d'être reliés à un circuit électrique extérieur 26 illustré de façon très schématique sur la figure 2. Les contacts 24 peuvent être constitués par des parties du revêtement 22 se prolongeant sur le noyau 16 de la bobine 12, vers l'avant, au-delà de la partie de ce noyau supportant la fibre optique.

Le circuit 26 peut être constitué par tout circuit électrique permettant de détecter une rupture de la boucle électrique 21 formée par le revêtement 22, soit pour informer un opérateur de cette rupture, soit pour commander le déclenchement d'un appareil embarqué sur l'engin. Sur la figure 2, les références 28 et 30 désignent respectivement une source de courant et un détecteur susceptibles d'être placés dans le circuit 26.

Dans la forme de réalisation préférentielle de l'invention illustrée sur la figure 2, la boucle électrique 21 formée par le revêtement 22 a sensiblement la forme d'un U dont la branche intermédiaire est orientée selon une direction sensiblement circonférentielle par rapport à la bobine 12 et dont les deux autres branches sont orientées selon une direction sensiblement longitudinale par rapport à cette dernière.

La réalisation d'une boucle électrique 21 à l'aide d'un revêtement 22 électriquement conducteur permet d'effectuer le repérage de longueur de fibre souhaité sans opposer au dévidage de la fibre 18 une résistance mécanique trop élevée. En, effet, des fibres optiques soumises à des contraintes mécaniques notables, risqueraient d'être endommagées et de ne plus transmettre correctement les signaux optiques.

Pour que ce résultat soit atteint, le revêtement électriquement conducteur 22 doit avoir une résistance mécanique pratiquement nulle et ne présenter quasiment pas d'adhérence sur la fibre optique. Pour cela, il est proposé d'utiliser un matériau électriquement conducteur tel qu'un vernis, une peinture, une colle ou une encre que l'on dépose sur la fibre optique 18 soit préalablement à son bobinage sur le noyau 16 soit, de préférence, lors de ce bobinage.

Dans ce dernier cas, le bobinage de la fibre optique 18 est interrompu après la réalisation de la couche sur laquelle on désire déposer le revêtement 22. Des masques faiblement adhésifs sont alors mis en place, par exemple à l'aide de gabarits, sur la couche de fibre optique à revêtir, pour ne laisser apparente que la zone correspondant à la forme de la boucle électrique 21 que l'on désire réaliser. Les masques utilisés à cet effet peuvent notamment être des masques en polytétrafluoréthylène.

Le revêtement électriquement conducteur est alors déposé sur les spires en contact de la bobine, par exemple à l'aide d'une spatule ou d'un pinceau.

Après séchage par exemple pendant 48 h à environ 25°C, les opérations de bobinage sont reprises.

Bien entendu, si plusieurs boucles électriques 21 doivent être réalisées sur une même bobine, les opérations qui viennent d'être décrites sont renouvelées après le bobinage de chacune des couches concernées par ces boucles.

Comme l'illustre schématiquement la flèche F sur la figure 3, le revêtement 22 électriquement conducteur formant chacune des boucles électriques 21 est de préférence placé sur des couches de fibre optique 18 qui se dévident de l'arrière vers l'avant c'est-à-dire de l'aval vers l'amont, en se référant à la direction selon laquelle la fibre quitte la bobine 12, sensiblement selon l'axe de cette dernière. Cette caractéristique permet encore de limiter les efforts de dévidage à une valeur aussi faible que possible.

Une boucle électrique conforme à l'invention présente, par exemple, une résistance d'environ 100 Ohms.

Il est à noter que le dépôt du revêtement 22 électriquement conducteur peut aussi être un dépôt métallique direct, effectué par exemple sous vide en phase vapeur, par pulvérisation cathodique laser, etc.

En outre, si le revêtement 22 électriquement conducteur formant la boucle électrique 21 est déposé sur la fibre optique 18 avant le bobinage, il est possible de former des boucles traversant plusieurs couches adjacentes du bobinage.

Différents matériaux ont été testés pour réaliser le revêtement 22 formant la boucle électrique 21 à l'intérieur du bobinage 12, conformément à l'invention. Parmi ces matériaux, ceux qui ont donné les meilleurs résultats sont une encre conductrice chargée à l'or (commercialisée sous la référence 5725 D par Dupont de Nemours), ainsi qu'une encre conductrice chargée à l'argent (commercialisée sous la référence 4922 par Dupont de Nemours). D'autres matériaux peuvent toutefois être utilisés, parmi lesquels on citera les vernis silicones chargés de poudre de nickel et les colles chargées de poudre de nickel.

## Revendications

1. Dispositif de repérage de longueur de fibre sur une bobine (12) de fibre optique (18), comprenant une bobine (12) de fibre optique (18) et au moins une boucle (21) en un matériau électriquement conducteur, noyée dans la bobine (12) de façon apte à être rompue lors d'un déroulement d'une longueur de fibre (18) prédéterminée, caractérisé par le fait que la boucle (21) est constituée d'un revêtement (22) électriquement conducteur, réalisé sur des spires en contact de la bobine (12).

2. Dispositif selon la revendication 1, caractérisé par le fait que le revêtement (22) est disposé sur les spires en contact d'une même couche de la bobine formée par la fibre optique.

3. Dispositif selon la revendication 2, caractérisé par le fait que, la fibre (18) quittant la bobine (12) selon une direction orientée sensiblement selon l'axe de cette dernière, la couche portant le revêtement (22) est une couche apte à se dévider de l'aval vers l'amont ou inversement par rapport à cette direction.

4. Dispositif selon l'une quelconque des revendications 1 à 3, caractérisé par le fait que la boucle a sensiblement la forme d'un U dont la branche intermédiaire est orientée selon une direction sensiblement circonférentielle par rapport à la bobine (12) et dont les deux autres branches sont orientées selon une direction sensiblement longitudinale par rapport à la bobine (12).

5. Procédé de fabrication d'un dispositif de repérage de longueur de fibre sur une bobine (12) de fibre optique (18), selon lequel on noie dans la bobine (12) au moins une boucle (21) en un matériau électriquement conducteur, apte à se rompre lors d'un déroulement d'une longueur de fibre prédéterminée, caractérisé par le fait qu'on forme ladite boucle (21) en réalisant un revêtement (22) électriquement conducteur sur des spires en contact de la bobine(12).

6. Procédé selon la revendication 5, caractérisé par le fait qu'on réalise le revêtement (22) lors du bobinage de la fibre (18).

7. Procédé selon la revendication 6, caractérisé par le fait qu'on réalise le revêtement (22) après le bobinage d'une couche donnée de la fibre, en plaçant des masques sur cette couche pour délimiter la forme de la boucle.

8. Procédé selon la revendication 5, caractérisé par le fait qu'on réalise le revêtement (22) avant de procéder au bobinage de la fibre (18).

9. Procédé selon l'une quelconque des revendications 5 à 8, caractérisé par le fait qu'on réalise le revêtement (22) par dépôt d'une peinture ou d'un vernis électriquement conducteur.

10. Procédé selon l'une quelconque des revendications 5 à 8, caractérisé par le fait qu'on réalise le revêtement (22) par dépôt métallique direct.

## Patentansprüche

1. Vorrichtung zum Markieren der Faserlänge auf einer Spule (12) für eine optische Faser (18), wenigsten eine Spule (12) einer optischen Faser (18) und eine Schleife (21) aus einem elektrisch leitfähigen Material umfassend, die so in die Spule (12) eingebettet ist, daß sie beim Abwickeln einer vorher festgelegten Länge der Faser (18) unterbrochen wird bzw. abreißt,
**dadurch gekennzeichnet,**
daß die Schleife (21) durch eine elektrisch leitfähige Beschichtung (22) gebildet wird, hergestellt auf in Kontakt befindlichen Windungen der Spule (12).

2. Vorrichtung nach Anspruch 1, dadurch gekennzeichnet, das die Beschichtung (22) auf den in Kontakt befindlichen Windungen derselben Schicht der durch die optische Faser gebildeten Spule angebracht ist.

3. Vorrichtung nach Anspruch 2, dadurch gekennzeichnet - wobei die Faser (18) die Spule (12) in einer im wesentlichen entsprechend der Achse dieser letzteren orientierten Richtung verläßt -, daß die die Beschichtung (22) tragende Schicht eine Schicht ist, die, bezogen auf diese Richtung, von vorn nach hinten oder umgekehrt abgespult werden kann.

4. Vorrichtung nach einem der Ansprüche 1 bis 3, dadurch gekennzeichnet, daß die Spule im wesentlichen die Form eines U hat, dessen Zwischenschenkel im wesentlichen entsprechend einer Umfangsrichtung in bezug auf die Spule (12) ausgerichtet ist, und dessen beiden Schenkel im wesentlichen entsprechend einer Längsrichtung in bezug auf die Spule (12) ausgerichtet sind.

5. Verfahren zur Herstellung einer Vorrichtung zum Markieren der Faserlänge auf einer Spule (12) für eine optische Faser (18), nach dem man in die Spule (12) wenigstens eine Schleife (21) aus einem elektrisch leitfähigen Material derart einbettet, daß sie beim Abwickeln einer vorher festgelegten Länge der Faser unterbrochen wird bzw. abreißt,
**dadurch gekennzeichnet,**
daß die Schleife (21) durch eine elektrisch leitfähige Beschichtung (22) gebildet wird, hergestellt auf in Kontakt befindlichen Windungen der Spule (12).

6. Verfahren nach Anspruch 5, dadurch gekennzeichnet, daß man die Beschichtung (22) während des Aufspulens der Faser (18) realisiert.

7. Verfahren nach Anspruch 6, daß man die Beschichtung (22) nach dem Aufspulen einer bestimmten Schicht der Faser realisiert, indem man Masken auf dieser Schicht anbringt, um die Form der Schleife abzugrenzen.

8. Verfahren nach Anspruch 5, dadurch gekennzeichnet, daß man die Beschichtung (22) vor dem Aufspulen der Faser (18) realsiert.

9. Verfahren nach einem der Ansprüche 5 bis 8, dadurch gekennzeichnet, daß man die Beschichtung (22) durch das Auftragen einer Farbe oder eines Lacks, jeweils elektrisch leitfähig, realisiert.

10. Verfahren nach einem der Ansprüche 5 bis 8, dadurch gekennzeichnet, daß man die Beschichtung (22) durch direkte Metallabscheidung realisiert.

## Claims

1. Device for indicating the length of fibre on a spool (12) of optical fibre (18), comprising a spool (12) of optical fibre (18) and at least one loop (21), made of an electrically conductive material, embedded in the spool (12) so as to be broken when a predetermined length of fibre (18) has been unwound, characterized in that the loop (21) consists of an electrically conductive coating (22) produced on contacting turns of the spool (12).

2. Device according to Claim 1, characterized in that the coating (22) is placed on the contacting turns of the same layer of the spool formed by the optical fibre.

3. Device according to Claim 2, characterized in that, since the fibre (18) leaves the spool (12) in a direction lying approximately along the axis of the said spool, the layer with the coating (22) is a layer able to be unwound from the downstream end to the upstream end, or vice versa, with respect to this direction.

4. Device according to any one of Claims 1 to 3, characterized in that the loop has approximately the shape of a U whose intermediate branch lies in an approximately circumferential direction with respect to the spool (12) and whose other two branches lie in an approximately longitudinal direction with respect to the spool.

5. Process for manufacturing a device for indicating the length of fibre on a spool (12) of optical fibre (18), in which at least one loop (21) made of an electrically conductive material is embedded in the spool (12), the said loop being able to break when a predetermined length of fibre has been unwound, characterized in that the said loop (21) is formed by producing an electrically conductive coating (22) on contacting turns of the spool (12).

6. Process according to Claim 5, characterized in that the coating (22) is produced while the fibre (18) is being spooled.

7. Process according to Claim 6, characterized in that the coating (22) is produced after a given layer of the fibre has been spooled, by placing masks on this layer in order to define the shape of the loop.

8. Process according to Claim 5, characterized in that the coating (22) is produced before the operation of spooling the fibre (18).

9. Process according to any one of Claims 5 to 8, characterized in that the coating (22) is produced by depositing an electrically conductive paint or varnish.

10. Process according to any one of Claims 5 to 8, characterized in that the coating (22) is produced by depositing metal directly onto it.
